# EUROPÄISCHE PATENTSCHRIFT

(11) **EP 1 598 959 B1**
(45) Veröffentlichungstag und Bekanntmachung des Hinweises auf die Patenterteilung: **25.10.2006**
(21) Anmeldenummer: 05090136.2
(22) Anmeldetag: 13.05.2005
(51) Int. Cl.: H04B 10/155, H04J 14/02

(54) **Optisches Sendemodul**
Optical transmitting module
Module d'émission optique

(30) Priorität: 19.05.2004 US 849198
(43) Veröffentlichungstag der Anmeldung: 23.11.2005
(73) Patentinhaber: Infineon Technologies Fiber Optics GmbH, 13629 Berlin (DE)
(72) Erfinder: Schrödinger, Karl, Dr., 14089 Berlin (DE)
(74) Vertreter: Müller, Wolfram Hubertus

(56) Entgegenhaltungen:
- EP-A- 0 735 705
- WO-A-03/058827
- US-B1- 6 178 023

## Beschreibung

Die Erfindung bezieht sich auf ein optisches Sendemodul, insbesondere für optische Datenübertragungssysteme.

### Aufgabe der Erfindung:

Der Erfindung liegt die Aufgabe zugrunde, ein optisches Sendemodul anzugeben, das sich besonders kostengünstig herstellen lässt. Gleichzeitig soll das Sendemodul von außen programmierbar sein. Dabei soll jedoch gewährleistet sein, dass die Anzahl der Anschlusspins zum Betreiben des optischen Sendemoduls so gering wie möglich ist. Ein Sendemodul nach dem Stand der Technik ist aus WO 03/058827 bekannt.

### Zusammenfassung der Erfindung:

Die genannte Aufgabe wird erfindungsgemäß durch ein optisches Sendemodul mit einem Sendeelement und einem das Sendeelement ansteuernden Treiber gelöst. Der Treiber erzeugt mit einem an seinem Treibereingang anliegenden Sendesignal ein Ansteuer- bzw. Modulationssignal für das Sendeelement. Das erfindungsgemäße Sendemodul weist darüber hinaus eine Steuereinrichtung auf, die den Treiber ansteuert und die darüber hinaus programmierbar ist. Zwischen einen Signaleingang des optischen Sendemoduls, den Treibereingang des Treibers und die Steuereinrichtung ist eine Multiplexeinrichtung geschaltet, mit der ein am Signaleingang des Sendemoduls anliegendes Eingangssignal zur Steuereinrichtung oder zum Treiber geschaltet werden kann.

Ein wesentlicher Vorteil des erfindungsgemäßen optischen Sendemoduls besteht darin, dass dieses mit sehr wenigen äußeren Anschlusspins auskommt, da nämlich der Signaleingang des Sendemoduls doppelt genutzt wird: Zum einen lässt sich über den Signaleingang des Sendemoduls das Sendesignal für den Treiber bzw. für das Sendeelement einspeisen; zum anderen ist es jedoch auch möglich, über den Signaleingang des Sendemoduls Programmiersignale zur Steuereinrichtung zu übertragen, da nämlich mittels der Multiplexeinrichtung alternativ eine Verbindung zwischen dem Signaleingang des Sendemoduls und der Steuereinrichtung hergestellt werden kann. Ein separater Anschluss für Programmiersignale ist also nicht erforderlich.

Zusammengefasst wird bei dem erfindungsgemäßen optischen Sendemodul somit trotz der "Programmierbarkeit" der Steuereinrichtung erreicht, dass das Sendemodul mit sehr wenigen Anschlüssen bzw. Anschlusspins auskommt, da der Signaleingang des Sendemoduls sowohl für das Einspeisen der Sendesignale als auch für das Einspeisen von Programmiersignalen genutzt werden kann.

Gemäß einer besonders vorteilhaften Ausführungsform des erfindungsgemäßen optischen Sendemoduls ist vorgesehen, dass die Multiplexeinrichtung einen Steuereingang aufweist, über den ein Steuersignal in die Multiplexeinrichtung einspeisbar ist. Die Multiplexeinrichtung ist dabei derart ausgestaltet, dass sie mit diesem Steuersignal wahlweise in einen ersten Schaltzustand, in dem der Signaleingang des Sendemoduls und die Steuereinrichtung miteinander verbunden sind, oder in einen zweiten Schaltzustand, in dem der Signaleingang des Sendemoduls und der Treibereingang des Treibers verbunden sind, geschaltet werden kann. Alternativ oder zusätzlich kann ein Umschalten auch in umgekehrter Richtung erfolgen.

Gemäß einer anderen vorteilhaften Ausführungsform des erfindungsgemäßen Sendemoduls ist vorgesehen, dass die Multiplexeinrichtung selbsttätig feststellt, ob es sich bei dem am Signaleingang des Sendemoduls anliegenden Eingangssignal um ein Programmiersignal für die Steuereinrichtung oder stattdessen um ein Sendesignal für den Treiber handelt. Falls es sich um ein Programmiersignal handelt, so schaltet die Multiplexeinrichtung das Eingangssignal selbsttätig zur Steuereinrichtung; falls es sich hingegen bei dem Eingangssignal um ein Sendesignal handelt, so schaltet die Multiplexeinrichtung das Eingangssignal selbsttätig zum Treiber.

Vorzugsweise weist die Multiplexeinrichtung einen Kontrollbaustein auf, der eingansseitig mit dem Signaleingang des Sendemoduls mittelbar oder unmittelbar in Verbindung steht. Der Kontrollbaustein dient dazu, die Programmiersignale und die Sendesignale zu erkennen bzw. voneinander zu trennen. Zusätzlich weist die Multiplexeinrichtung vorzugsweise eine von dem Kontrollbaustein über einen Steueranschluss angesteuerte Multiplexeinheit auf, die mit zumindest einem Eingang, zwei Ausgängen und dem bereits genannten Steueranschluss ausgestattet ist. Mit diesen Ein- bzw. Ausgängen steht die Multiplexeinheit eingangsseitig mit dem Signaleingang des Sendemoduls und ausgangsseitig einerseits mit dem Treibereingang des Treibers sowie andererseits mit der Steuereinrichtung in Verbindung. In Abhängigkeit von den Steuersignalen des Kontrollbausteins verbindet die Multiplexeinheit entweder den Signaleingang des Sendemoduls mit dem Treibereingang des Treibers oder stattdessen mit der Steuereinrichtung.

Vorzugsweise ist zwischen die Multiplexeinheit und den Signaleingang des Sendemoduls ein Leitungsabschlusswiderstand geschaltet. Ein solcher Leitungsabschlusswiderstand ist insbesondere im Hinblick auf die für den Treiber bestimmten Sendesignale von Vorteil, damit diese an der Schnittstelle zur Multiplexeinrichtung einen geeigneten bzw. passenden Leitungsabschluss bzw. Wellenwiderstand vorfinden.

Gemäß einer weiteren bevorzugten Ausführungsform des optischen Sendemoduls ist vorgesehen, dass der Leitungsabschlusswiderstand bezüglich seiner Widerstandsgröße steuerbar ist. Diese Steuerung der Widerstandsgröße kann beispielsweise über einen Widerstands-Steuereingang des Leitungsabschlusswiderstandes erfolgen, mit dem der Kontrollbaustein zwecks dessen Ansteuerung in Verbindung steht. Bevorzugt steuert der Kontrollbaustein den Leitungsabschlusswiderstand derart an, dass dieser einen für Sendesignale geeigneten Widerstandswert aufweist, falls am Signaleingang des Sendemoduls ein Sendesignal anliegt. Entsprechend stellt der Kontrollbaustein den Leitungsabschlusswiderstand auf einen für ein Programmiersignal geeigneten Widerstandswert ein, falls am Signaleingang des Sendemoduls ein Programmiersignal anliegt.

Beispielsweise schaltet der Kontrollbaustein den Leitungsabschlusswiderstand hochohmig oder vollständig ab, falls es sich um ein Programmiersignal handelt; denn Programmiersignale sind regelmäßig langsame bzw. niederfrequente Signale, die übliche Leitungsabschlüsse nicht treiben können.

Gemäß einer weiteren bevorzugten Ausführungsform des erfindungsgemäßen Sendemoduls ist vorgesehen, dass die Multiplexeinrichtung einen Patterngenerator aufweist. Die Multiplexeinrichtung ist dabei derart ausgestaltet, dass sie den Patterngenerator mit dem Treiber verbindet, wenn der Signaleingang des Sendemoduls mit der Steuereinrichtung verbunden wird. Durch diese Ausgestaltung des Sendmoduls ist sichergestellt, dass ein Abgleich des Sendeelements und/oder des Treibers möglich ist: Bei einem solchen Abgleich ist es nämlich erforderlich, dass das Sendeelement aktiv betrieben wird und optische Ausgangssignale erzeugt, die gemessen und ausgewertet werden können; gleichzeitig muss jedoch ein Programmieren der Steuereinrichtung des Sendemoduls von außen möglich sein. Um dies zu gewährleisten, wird der Signaleingang des Sendemoduls mit der Steuereinrichtung verbunden, so dass Programmiersignale zur Steuereinrichtung gelangen können; mit dem Patterngenerator wird gleichzeitig das Sendeelement angesteuert, so dass ein aktives Betreiben des Sendeelements gleichzeitig möglich ist.

Der Patterngenerator kann beispielsweise eine Pseudo-ZufallsDatenfolge generieren, die als Sendesignal zum Treiber und damit zum Sendeelement gelangt.

Vorzugsweise weist die Multiplexeinrichtung zusätzlich zu dem Patterngenerator zumindest zwei Multiplexeinheiten auf, von denen eine erste mit dem Signaleingang des Sendemoduls sowie mit der Steuereinrichtung und eine zweite Multiplexeinheit mit dem Treiber und dem Patterngenerator in Verbindung steht. Ein Kontrollbaustein der Multiplexeinrichtung steuert die beiden Multiplexeinheiten derart an, dass ein am Signaleingang des Sendemoduls anliegendes Sendesignal durch beide Multiplexeinheiten hindurch zum Treiber geschaltet wird. Liegt am Signaleingang des Sendemoduls hingegen ein Programmiersignal an, so wird dieses mithilfe der ersten Multiplexeinheit zur Steuereinrichtung übertragen; in diesem Fall dient die zweite Multiplexeinheit dazu, den Patterngenerator mit dem Treiber zu verbinden, so dass das Sendeelement beispielsweise mit einer Pseudo-ZufallsDatenfolge betrieben werden kann.

Gemäß einer weiteren vorteilhaften Ausführungsform des erfindungsgemäßen optischen Sendemoduls weist dieses einen "Level-Detektor" auf, mit dem die Multiplexeinrichtung den Signal-Level - also die Signalhöhe bzw. die Signalamplitude oder Signalleistung - des Eingangssignals am Signaleingang des Sendemoduls misst. Anhand des festgestellten Signal-Levels entscheidet die Multiplexeinrichtung, ob es sich bei dem Eingangssignal des Sendemoduls um ein Programmiersignal für die Steuereinrichtung oder stattdessen um ein Sendesignal für die Sendeeinrichtung handelt. Beispielsweise kann die Multiplexeinrichtung das Eingangssignal als Programmiersignal auffassen, wenn dessen Signal-Level einen vorgegebenen Schwell-Level über- oder unterschreitet.

Der Level-Detektor ist vorzugsweise in der bereits beschriebenen Kontrolleinheit der Multiplexeinrichtung angeordnet, in der zusätzlich auch eine Speichereinrichtung zum Festhalten bzw. Speichern des Signalauswerteergebnisses enthalten ist. Die Speichereinrichtung kann beispielsweise durch ein Flip-Flop gebildet sein.

Alternativ kann die Multiplexeinrichtung auch einen Frequenz-Detektor aufweisen, mit dem sie den Frequenzbereich des Eingangssignals des Sendemoduls misst. In Abhängigkeit vom Frequenzbereich des Eingangssignals stellt die Multiplexeinrichtung fest, ob es sich bei dem Eingangssignal um ein Sendesignal für die Sendeeinrichtung oder stattdessen um ein Programmiersignal für die Steuereinrichtung handelt. Beispielsweise kann die Multiplexeinrichtung das Eingangssignal als Programmiersignal auffassen, wenn dessen Frequenzbereich außerhalb des für Sendesignale typischen Frequenzbereichs liegt. Der typische Frequenzbereich ist beispielsweise in der Multiplexeinrichtung fest abgespeichert.

Gemäß einer anderen bevorzugten Ausführungsform des optischen Sendemoduls ist vorgesehen, dass die Multiplexeinrichtung einen Code-Detektor aufweist, mit dem sie die Codefolgen des am Signaleingang des Sendemoduls anliegenden Empfangssignals auswertet. Die Multiplexeinrichtung unterscheidet in Abhängigkeit von den festgestellten Codefolgen, ob es sich um ein Sendesignal oder um ein Programmiersignal handelt. Beispielsweise fasst die Multiplexeinrichtung das Eingangssignal als Programmiersignal auf, wenn sich dessen Codefolgen von typischen oder vorab definierten Codefolgen für Sendesignale unterscheiden.

Zur Erläuterung der Erfindung zeigen:
- Figur 1: ein erstes Ausführungsbeispiel für ein erfindungsgemäßes Sendemodul,
- Figur 2: ein zweites Ausführungsbeispiel für ein erfindungsgemäßes Sendemodul,
- Figuren 3, 4, 5: den Aufbau und die Funktionsweise einer Multiplexeinrichtung des Sendemoduls gemäß Figur 2,
- Figur 6: ein Ausführungsbeispiel für einen Kontrollbaustein für die Multiplexeinrichtung gemäß Figur 3 und
- Figur 7: ein Ausführungsbeispiel für einen Leitungsabschlusswiderstand, wie er bei dem Ausführungsbeispiel gemäß Figur 2 gezeigt ist.

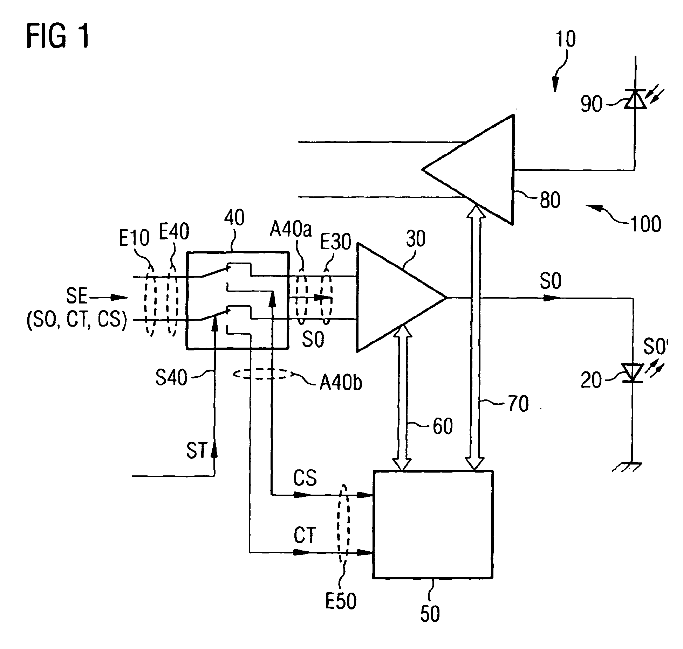

In den Figuren 1 bis 7 werden für identische oder vergleichbare Komponenten dieselben Bezugszeichen verwendet.

In der Figur 1 erkennt man ein erstes Ausführungsbeispiel für ein erfindungsgemäßes optisches Sendemodul 10. Man sieht einen Laser 20, der ein optisches Sendelement bildet und der mit einem Treiber 30, also einem Lasertreiber, angesteuert wird.

Ein Treibereingang E30 des Lasertreibers 30 steht mit einem ersten Ausgang A40a einer Multiplexeinrichtung 40 in Verbindung. Ein zweiter Ausgang A40b der Multiplexeinrichtung 40 ist mit einer Steuereinrichtung 50 verbunden, die über Steuerleitungen 60 und 70 mit dem Lasertreiber 30 sowie mit einer Empfängerschaltung 80, in Verbindung steht. Die Empfängerschaltung 80 ist mit einer Fotodiode 90 verbunden, die zusammen mit der Empfängerschaltung 80 einen Empfangszweig 100 des Sendemoduls 10 bildet. Das Sendemodul 10 ist somit ein Sende- und Empfangsmodul und kann beispielsweise als "Transceiver" bezeichnet werden.

Die Funktion der Steuereinrichtung 50 besteht darin, den Lasertreiber 30 und die Empfängerschaltung 80 anzusteuern und zu betreiben. Hierzu ist die Steuereinrichtung 50 entsprechend programmiert. Wie nachfolgend erläutert werden wird, ist die Steuereinrichtung 50 von außen "umprogrammierbar", so dass das in der Steuereinrichtung 50 enthaltene Betriebsprogramm geändert bzw. umprogrammiert werden kann.

Ein Eingang E40 der Multiplexeinrichtung 40 steht mit einem Signaleingang E10 des Sendemoduls 10 in Verbindung. Der Begriff Signaleingang ist hierbei sehr weit zu verstehen; denn über den Signaleingang E10 können beliebige Signale in das Sendemodul 10 eingespeist werden; beispielsweise kann es sich um differentielle Signale handeln, wovon beispielhaft im Zusammenhang mit den Ausführungsbeispielen ausgegangen wird: Gezeigt sind daher in den Figuren jeweils differentielle, "zweiadrige" Anschlüsse.

Die Multiplexeinrichtung 40 weist darüber hinaus einen Steuereingang S40 auf, über den ein Steuersignal ST in die Multiplexeinrichtung 40 eingespeist werden kann. Die Multiplexeinrichtung 40 ist derart ausgestaltet, dass mit dem Steuersignal ST die Multiplexeinrichtung 40 umgeschaltet werden kann: In der Figur 1 ist dargestellt, dass der Eingang E40 der Multiplexeinrichtung 40 mit dem ersten Ausgang A40a der Multiplexeinrichtung 40 und damit mit dem Treibereingang E30 des Lasertreibers 30 in Verbindung steht. Mithilfe des Steuersignals ST am Steuereingang S40 lässt sich die Multiplexeinrichtung 40 nun derart umschalten, dass der Eingang E40 der Multiplexeinrichtung 40 mit dem zweiten Ausgang A40b der Multiplexeinrichtung 40 und damit mit einem Eingang E50 der Steuereinrichtung 50 verbunden wird.

Das Sendemodul 10 gemäß der Figur 1 lässt sich wie folgt betreiben: Für einen "normalen" Sendebetrieb wird die Multiplexeinrichtung 40 mittels des Steuersignals ST am Steuereingang S40 derart eingestellt, dass die am Signaleingang E10 des Sendemoduls 10 anliegenden Sendesignale S0 über die Multiplexeinrichtung 40 und den Lasertreiber 30 zum Laser 20 gelangen und dort als optische Sendesignale SO' abgestrahlt werden. Diese Einstellung der Multiplexeinrichtung 40 ist beispielsweise die "Normalstellung" nach einem Neu-Inbetriebnehmen des Sendemoduls 10.

Soll das Sendemodul 10 nun umprogrammiert oder abgeglichen werden, so muss auf die Steuereinrichtung 50 innerhalb des Sendemoduls 10 zugegriffen werden. Dies geschieht bei dem Sendemodul 10 über die Multiplexeinrichtung 40, indem über ein geeignetes Steuersignal ST am Steuereingang S40 die Multiplexeinrichtung 40 derart umgestellt wird, dass nunmehr der Eingang E40 der Multiplexeinrichtung 40 mit dem zweiten Ausgang A40b der Multiplexeinrichtung 40 und damit mit dem Eingang E50 der Steuereinrichtung 50 verbunden wird. Über den Eingang E40 der Multiplexeinrichtung 40 bzw. über den Signaleingang E10 des Sendemoduls 10 lassen sich nun Programmiersignale CS sowie ein Programmiertakt CT vom Eingang E10 des Sendemoduls 10 zur Steuereinrichtung 50 - oder umgekehrt - übermitteln, so dass ein Umprogrammieren der Steuereinrichtung 50 möglich ist.

Es lässt sich in der Figur 1 erkennen, dass nach einem Umschalten der Multiplexeinrichtung 40 der Lasertreiber 30 an seinem Treibereingang E30 keine Sendesignale mehr erhält, so dass der Laser 20 außer Betrieb ist.

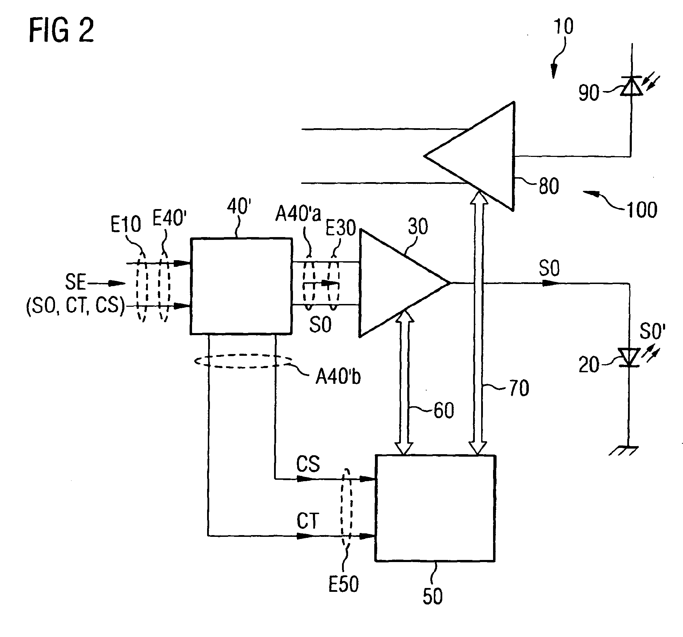

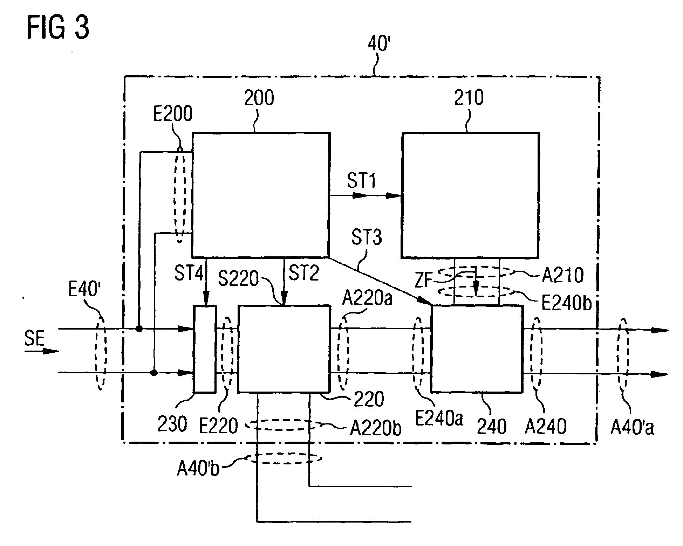

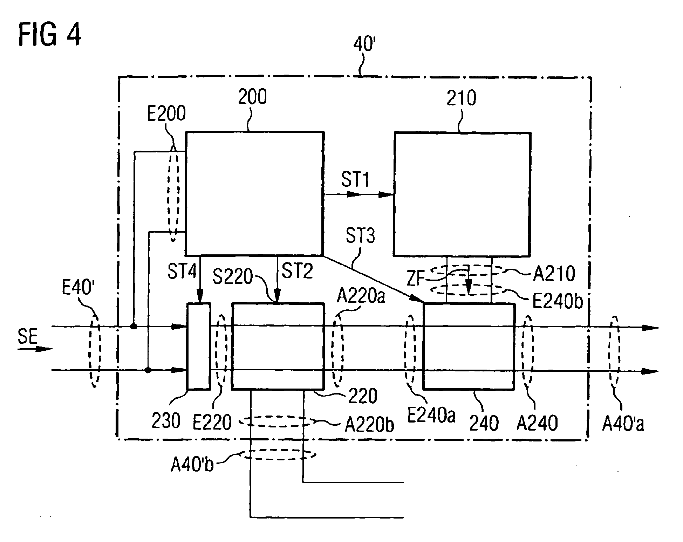

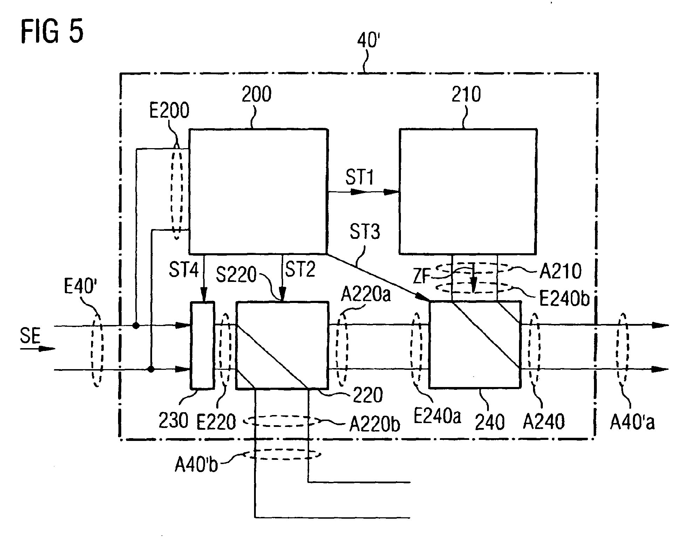

In der Figur 2 ist ein zweites Ausführungsbeispiel für ein erfindungsgemäßes Sendemodul gezeigt. Der Unterschied zwischen dem Sendemodul 10 gemäß der Figur 2 und dem Sendemodul 10 gemäß der Figur 1 besteht in der Ausgestaltung der Multiplexeinrichtung 40', deren Aufbau in der Figur 3 gezeigt und deren Funktionsweise im Zusammenhang mit den Figuren 4 und 5 nachfolgend erläutert wird.

Man erkennt in der Figur 3, dass die Multiplexeinrichtung 40' einen Kontrollbaustein 200 aufweist, der mit dem Eingang E40' der Multiplexeinrichtung 40' und damit mit dem Eingang E10 des Sendemoduls 10 in Verbindung steht. Die Aufgabe des Kontrollbausteins 200 besteht darin, die am Signaleingang E10 des Sendemoduls 10 anliegenden Eingangssignale SE zu untersuchen und zu erkennen, ob es sich dabei um ein Programmiersignal CS und ein Programmiertakt CT für die Steuereinrichtung 50 oder um ein Sendesignal S0 für den Laser 20 handelt.

In der Figur 3 ist darüber hinaus ein Patterngenerator 210 erkennbar, der mittels eines Steuersignals ST1 von dem Kontrollbaustein 200 angesteuert wird.

In der Figur 3 erkennt man darüber hinaus eine erste Multiplexeinheit 220, bei der es sich um einen 1x2 Multiplexer handelt. Dies bedeutet, dass die an einem Eingang E220 an der Multiplexeinheit 220 anliegenden Signale wahlweise zu einem ersten Ausgang A220a oder zu einem zweiten Ausgang A220b geschaltet werden können; selbstverständlich ist nach Herstellung der jeweiligen Verbindung ein bidirektionaler Betrieb der Leitungsverbindung möglich, so dass Signale in beiden Richtungen übertragen werden können.

Die erste Multiplexeinheit 220 steht über einem steuerbaren Leitungsabschlusswiderstand 230 mit dem Signaleingang E10 des Sendemoduls 10 in Verbindung. Angesteuert wird die erste Multiplexeinheit 220 über einen Steueranschluss S220 von der Kontrolleinheit 200.

Der erste Ausgang A220a der ersten Multiplexeinheit 220 ist mit einem ersten Eingang E240a einer zweiten Multiplexeinheit 240 verbunden, deren zweiter Eingang E240b mit einem Ausgang A210 des Patterngenerators 210 in Verbindung steht.

Ausgangsseitig, also mit einem Ausgang A240 steht die zweite Multiplexeinheit 240 mit dem in der Figur 2 gezeigten Treibereingang E30 des Lasertreibers 30 in Verbindung.

Die Multiplexeinrichtung 40' gemäß der Figur 3 wird wie folgt betrieben:

Zunächst wird das am Eingang E10 des Sendemoduls 10 anliegende Eingangssignal SE von dem Kontrollbaustein 200 analysiert. Handelt es sich bei dem Eingangssignal SE um ein Sendesignal S0 für den Lasertreiber 30 bzw. für den Laser 20, so steuert der Kontrollbaustein 200 die erste Multiplexeinheit 220 mit einem Steuersignal ST2 derart an, dass diese den Eingang E220 mit dem ersten Ausgang A220a verbindet. Damit wird das Sendesignal S0 am Eingang E10 des Sendemoduls 10 zum Eingang E240a der zweiten Multiplexeinheit 240 durchgeschaltet.

Mit einem Steuersignal ST3 steuert der Kontrollbaustein 200 die zweite Multiplexeinheit 240 derart an, dass der erste Eingang E240a und der Ausgang A240 der zweiten Multiplexeinheit 240 verbunden werden. Das Sendesignal S0 gelangt somit zu dem Lasertreiber 30 und zu dem Laser 20.

Der vollständige Signalverlauf des Sendesignals S0 ist in der Figur 4 gezeigt.

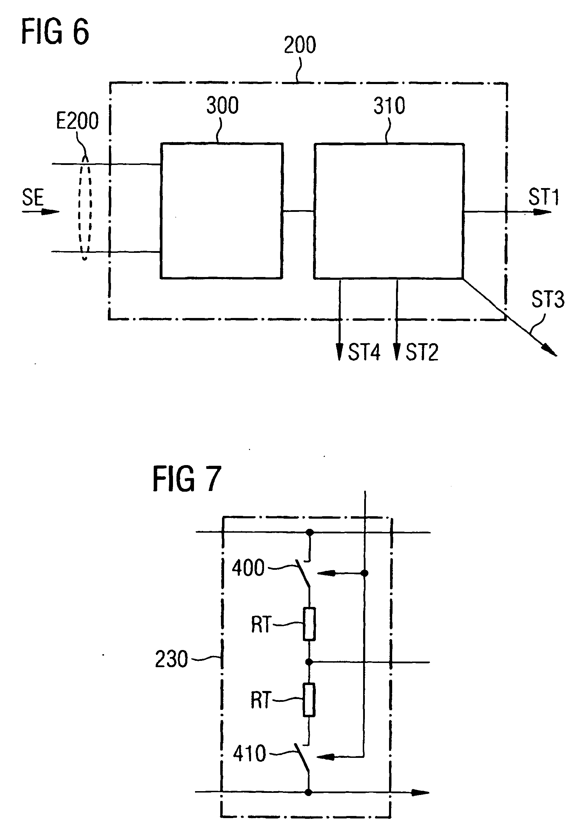

Um Signalreflektionen am Eingang E220 der ersten Multiplexeinheit 220 zu vermeiden, ist zwischen der ersten Multiplexeinheit 220 und dem Signaleingang E10 der programmierbare Leitungsabschlusswiderstand 230 angeordnet, der über ein Steuersignal ST4 derart angesteuert wird, dass das Sendesignal SE möglichst unverfälscht bleibt. Die Funktionsweise des programmierbaren Leitungsabschlusswiderstands 230 wird im Zusammenhang mit der Figur 7 weiter unten erläutert.

Falls es sich bei dem Eingangssignal SE am Signaleingang E10 des Sendemoduls 10 nicht um das Sendesignal S0, sondern hingegen um ein Programmiersignal CS und/oder um einen Programmiertakt CT für die Steuereinrichtung 50 handelt, so wird dies von dem Kontrollbaustein 200 in entsprechender Weise erkannt.

Der Kontrollbaustein 200 steuert in einem solchen Falle über die beiden Steuersignale ST2 und ST3 die erste Multiplexeinheit 220 sowie die zweite Multiplexeinheit 240 derart an, dass diese jeweils ihren Schaltzustand ändern. Dies zeigt die Figur 5 im Detail.

Im Ergebnis verbindet nunmehr die erste Multiplexeinheit 220 ihren Eingang E220 mit ihrem zweiten Ausgang A220b, so dass das Programmiersignal CS und der Programmiertakt CT unmittelbar zur Steuereinrichtung 50 geschaltet werden.

Mit dem Steuersignal ST3 wird die zweite Multiplexeinheit 240 von dem Kontrollbaustein 200 derart angesteuert, dass deren zweiter Eingang E240b mit dem Ausgang A240 verbunden wird; damit steht nun der Patterngenerator 210 mit dem Lasertreiber 30 und der Laserdiode 20 in Verbindung, so dass die von dem Patterngenerator 210 generierten Pseudo-Zufalls-Datenfolgen ZF zum Lasertreiber 30 und damit zum Laser 20 gelangen können. Der Laser 20 wird somit unmittelbar durch den Patterngenerator betrieben.

Alternativ kann der Patterngenerator 210 auch durch die Steuereinrichtung 50 gesteuert werden, beispielsweise durch Programmierung von bestimmten Bits der Steuereinrichtung 50. Beispielsweise können damit unterschiedliche Pattern ausgewählt werden. Im Übrigen muss der Patterngenerator 210 nicht in der Multiplexeinrichtung 40' angeordnet sein; der Patterngenerator 210 kann alternativ beispielsweise auch in der Steuereinrichtung 50 integriert sein oder zu dieser gehören.

Der Signaleingang E10 des Sendemoduls 10 lässt sich somit zum Übertragen eines Programmiersignals CS und eines Programmiertakts CT zur Steuereinrichtung 50 verwenden.

Da der Patterngenerator 210 den Laser 20 weiter betreibt, ist auch - im Unterschied zum ersten Ausführungsbeispiel gemäß der Figur 1 - ein Abgleich des Sendemoduls 20 möglich, da nämlich während des Programmierens der Steuereinrichtung 50 über den Signaleingang E10 dennoch ein Laserbetrieb des Lasers 20 erlaubt wird.

Im Zusammenhang mit der Figur 6 ist ein Ausführungsbeispiel für den Kontrollbaustein 200 gemäß der Figur 4 gezeigt. Man erkennt, dass der Kontrollbaustein 200 einen Level-Detektor 300 aufweist, der mit dem Eingang E200 des Kontrollbausteins 200 und damit mit dem Signaleingang E10 des Sendemoduls 10 (vgl. Figur 3) in Verbindung steht.

Ausgangsseitig ist der Level-Detektor 300 mit einer Speichereinrichtung 310 in Form eines RS-Flip-Flops verbunden. Das RS-Flip-Flop 310 gibt ausgangsseitig die bereits erläuterten Steuersignale ST1, ST2, ST3 sowie ST4 zum Ansteuern des programmierbaren Leitungsabschlusswiderstands 230, des Patterngenerators 210 und der beiden Multiplexeinheiten 220 und 240 ab. Damit können beispielsweise durch ein kurzes Triggersignal (kurzzeitig anliegender bestimmter Pegel, Frequenz-Burst oder Code) das Flip-Flop und damit die Multiplexer umgeschaltet werden. Nach Beendigung der Programmierung können die Multiplexer wieder in den ursprünglichen Zustand zurückgeschaltet werden. Es ist somit eine zeitdiskrete und nicht nur eine zeitkontinuierliche Steuerung möglich.

Der Level-Detektor 300 analysiert den Signal-Level - also die Signalamplitude bzw. die Signalleistung - des am Eingang E10 des Sendemoduls 10 anliegenden Eingangssignals SE. Unter- oder überschreitet der Signal-Level des Eingangssignals SE eine vorgegebene Level-Schwelle (z. B. Amplitudenschwelle, Leistungsschwelle, etc.), so entscheidet der Level-Detektor 300, dass es sich bei dem Eingangssignal SE um ein Programmiersignal CS bzw. um einen Programmiertakt CT handelt. Liegt hingegen der Signal-Level am Signaleingang E10 in einem für Sendesignale S0 vorgegebenen Levelbereich, so schließt der Level-Detektor 300 daraus, dass es sich bei dem Eingangssignal SE um ein Sendesignal S0 für den Lasertreiber 30 bzw. für den Laser 20 handelt. In entsprechender Weise wird das RS-Flip-Flop 310 vom Level-Detektor 300 angesteuert.

Anstelle eines Level-Detektors 300 kann in entsprechender Weise ein Frequenz-Detektor oder ein Code-Detektor eingesetzt werden. Bei einem Frequenz-Detektor würde dieser den Frequenzbereich des Eingangssignals SE am Eingang E10 des Sendemoduls 10 messen und in Abhängigkeit des gemessenen Frequenzbereichs feststellen, ob es sich um ein Sendesignal S0 für den Lasertreiber 30 bzw. für den Laser 20 oder um ein Programmiersignal CS für die Steuereinrichtung 50 handelt. Beispielsweise kann dies dadurch festgestellt werden, dass der gemessene Frequenzbereich Fmess mit einem für Sendesignale S0 typischen Frequenzbereich Ftyp verglichen wird.

Alternativ kann anstelle des Level-Detektors 300 gemäß der Figur 6 auch ein Code-Detektor eingesetzt werden, der die Codefolgen am Signaleingang E10 auswertet und in Abhängigkeit von den festgestellten Codefolgen unterscheidet, ob es sich um ein Sendesignal S0 für den Laser 20 oder um ein Programmiersignal CS für die Steuereinrichtung 50 handelt.

In der Figur 7 ist ein Ausführungsbeispiel für einen programmierbaren Leitungsabschlusswiderstand 230 gezeigt. Man erkennt, dass der Leitungsabschlusswiderstand 230 zwei Widerstände RT aufweist, die über jeweils einen Schalter 400 bzw. 410 mit dem Signaleingang E10 des Sendemoduls 10 in Verbindung gebracht werden können. Die beiden Widerstände RT sind mit ihrem jeweils anderen Anschluss untereinander verbunden und liegen auf einer vorgegebenen Bias-Spannung, beispielsweise dem Massepotential.

### Bezugszeichenliste

- 10: Sendemodul
- 20: Laser
- 30: Lasertreiber
- 40: Multiplexeinrichtung
- 50: Steuereinrichtung
- 60, 70: Steuerleitungen
- 80: Empfangsschaltung
- 90: Fotodiode
- 200: Kontrollbaustein
- 210: Patterngenerator
- 220: Erste Multiplexeinheit
- 230: Leitungsabschlusswiderstand
- 240: Zweite Multiplexeinheit
- 300: Level-Detektor
- 310: RS-Flip-Flop
- 400, 410: Schalter
- ST, ST1, ST2, ST3, ST4: Steuersignale
- ZF: Pseudo-Zufallsdatenfolge
- CS: Programmiersignale
- CT: Programmiertakt
- S0: Sendesignal für Laser

## Patentansprüche

1. Optisches Sendemodul (10) mit
- einem optischen Sendeelement (20),
- einem das Sendeelement (20) ansteuernden Treiber (30), der mit einem an seinem Treibereingang (E30) anliegenden Sendesignal ein Ansteuersignal (S0) für das Sendeelement (20) erzeugt,
- einer den Treiber (30) ansteuernden, programmierbaren Steuereinrichtung (50) und
- einer zwischen einen Signaleingang (E10) des Sendemoduls (10), den Treibereingang (E30) und die Steuereinrichtung (50) geschalteten Multiplexeinrichtung (40, 40'), mit der ein am Signaleingang (E10) des Sendemoduls (10) anliegendes Eingangsignal (SE) zur Steuereinrichtung (50) oder zum Treiber (30) geschaltet werden kann.

2. Optisches Sendemodul (10) nach Anspruch 1,
- wobei die Multiplexeinrichtung (40, 40') einen Steuereingang (S40) aufweist, über den ein Steuersignal (ST) in die Multiplexeinrichtung (40, 40') einspeisbar ist, und
- wobei die Multiplexeinrichtung (40, 40') derart ausgestaltet ist, dass sie mit dem Steuersignal (ST) von einem Schaltzustand, in dem der Signaleingang (E10) des Sendemoduls (10) und die Steuereinrichtung (50) verbunden sind, in einen Schaltzustand, in dem der Signaleingang (E10) des Sendemoduls (10) und der Treibereingang (E30) verbunden sind, - oder umgekehrt - geschaltet werden kann.

3. Optisches Sendemodul (10) nach Anspruch 1,
- wobei die Multiplexeinrichtung (40, 40') derart ausgestaltet ist, dass sie feststellt, ob es sich bei dem am Signaleingang (E10)des Sendemoduls (10) anliegenden Eingangssignal (SE) um ein Programmiersignal (CS) für die Steuereinrichtung (50) oder um ein Sendesignal (S0) für den Treiber (30) handelt, und
- wobei die Multiplexeinrichtung (40, 40') das Eingangssignal (SE) selbsttätig zur Steuereinrichtung (50) schaltet, falls es sich um ein Programmiersignal (CS) handelt, oder zum Treiber (30) schaltet, falls es sich um ein Sendesignal (S0)handelt.

4. Optisches Sendemodul (10) nach Anspruch 3,
- wobei die Multiplexeinrichtung (40, 40') einen Kontrollbaustein (200) aufweist, der eingansseitig mit dem Signaleingang (E10) des Sendemoduls (10) mittelbar oder unmittelbar in Verbindung steht und Programmiersignale (CS) und Sendesignale (S0) jeweils erkennt,
- wobei die Multiplexeinrichtung (40, 40') eine von dem Kontrollbaustein (200) über einen Steueranschluss (S220) angesteuerte Multiplexeinheit (220) mit zumindest einem Eingang (E220), zwei Ausgängen (A220a, A220b) und dem genannten Steueranschluss (S220) aufweist,
- wobei die Multiplexeinheit (220) eingangsseitig mit dem Signaleingang (E10) des Sendemoduls (10) und ausgangsseitig mit dem Treibereingang (E30) des Treibers (30) sowie mit der Steuereinrichtung (50) mittelbar oder unmittelbar in Verbindung steht und
- wobei die Multiplexeinheit (220) in Abhängigkeit von den Steuersignalen (ST2) des Kontrollbausteins (200) den Signaleingang (E10) des Sendemoduls (10) mit dem Treibereingang (E30) des Treibers (30) oder mit der Steuereinrichtung (50) verbindet.

5. Optisches Sendemodul (10) nach Anspruch 4, wobei zwischen der Multiplexeinheit (220) und dem Signaleingang (E10) des Sendemoduls (10) ein Leitungsabschlusswiderstand (230) angeordnet ist.

6. Optisches Sendemodul (10) nach Anspruch 5, wobei der Leitungsabschlusswiderstand (230) bezüglich seiner Widerstandsgröße steuerbar ist.

7. Optisches Sendemodul (10) nach Anspruch 6, wobei der Leitungsabschlusswiderstand (230) einen Widerstands-Steuereingang (ST4) aufweist, der mit dem Kontrollbaustein (200) in Verbindung steht.

8. Optisches Sendemodul (10) nach Anspruch 7, wobei der Kontrollbaustein (200) den Leitungsabschlusswiderstand (230)
- auf einen für Sendesignale geeigneten Widerstandswert einstellt, falls am Signaleingang (E10) des Sendemoduls (10) ein Sendesignal (S0) anliegt, und
- auf einen für ein Programmiersignal geeigneten Widerstandswert einstellt, falls am Signaleingang (E10) des Sendemoduls (10) ein Programmiersignal (CS) anliegt.

9. Optisches Sendemodul (10) nach Anspruch 8, wobei
- der Kontrollbaustein (200) den Leitungsabschlusswiderstand (230) hochohmig schaltet oder abschaltet, falls am Signaleingang (E10) des Sendemoduls (10) ein Programmiersignal (CS) anliegt.

10. Optisches Sendemodul (10) nach Anspruch 1,
- wobei das Sendemodul (10) einen Patterngenerator (210) aufweist, und
- wobei die Multiplexeinrichtung (40, 40') derart ausgestaltet ist, dass sie den Patterngenerator (210) mit dem Treiber (30) verbindet, wenn der Signaleingang (E10) des Sendemoduls (10) mit der Steuereinrichtung (50) verbunden wird.

11. Optisches Sendemodul (10) nach Anspruch 10,
- wobei die Multiplexeinrichtung (40, 40') einen Steuereingang (S40) aufweist, über den ein Steuersignal (ST) in die Multiplexeinrichtung (40, 40') einspeisbar ist und
- wobei die Multiplexeinrichtung (40, 40') derart ausgestaltet ist, dass sie mit dem Steuersignal (ST) von einem den Signaleingang (E10) des Sendemoduls (10) und die Steuereinrichtung (50) verbindenden Schaltzustand in einen den Signaleingang (E10) des Sendemoduls (10) und den Treibereingang (E30) des Treibers (30) verbindenden Schaltzustand - oder umgekehrt - geschaltet werden kann.

12. Optisches Sendemodul (10) nach Anspruch 10,
- wobei die Multiplexeinrichtung (40, 40') derart ausgestaltet ist, dass sie feststellt, ob es sich bei dem am Signaleingang (E10) des Sendemoduls (10) anliegenden Eingangssignal (SE) um ein Programmiersignal (CS) für die Steuereinrichtung (50) oder um ein Sendesignal (S0) für den Treiber (30) handelt, und
- wobei die Multiplexeinrichtung (40, 40') das Eingangssignal (SE) selbsttätig zur Steuereinrichtung (50) schaltet, falls es sich um ein Programmiersignal (CS) handelt, und zum Treiber (30) schaltet, falls es sich um ein Sendesignal (S0) handelt.

13. Optisches Sendemodul (10) nach Anspruch 12,
- wobei die Multiplexeinrichtung (40, 40') einen Kontrollbaustein (200) aufweist, der eingansseitig mit dem Signaleingang (E10) des Sendemoduls (10) mittelbar oder unmittelbar in Verbindung steht und Programmiersignale (CS) und Sendesignale (S0) erkennt,
- wobei die Multiplexeinrichtung (40, 40') eine von dem Kontrollbaustein (200) über einen Steueranschluss (S220) angesteuerte erste Multiplexeinheit (220) mit zumindest einem Eingang (E220), zwei Ausgängen (A220a, A220b) und dem genannten Steueranschluss (S220) aufweist,
- wobei die erste Multiplexeinheit (220) eingangsseitig mit dem Signaleingang (E10) des Sendemoduls (10) und ausgangsseitig mit dem Treibereingang (E30) des Treibers (30) sowie mit der Steuereinrichtung (50) mittelbar oder unmittelbar in Verbindung steht und
- wobei die erste Multiplexeinheit (220) in Abhängigkeit von den Steuersignalen des Kontrollbausteins (200) den Signaleingang (E10) des Sendemoduls (10) mit dem Treibereingang (E30) des Treibers (30) oder mit der Steuereinrichtung (50) verbindet.

14. Optisches Sendemodul (10) nach Anspruch 13, wobei
- die Multiplexeinrichtung (40, 40') eine zweite Multiplexeinheit (240) mit zumindest zwei Signal-Eingängen (E240a, E240b), einem Signal-Ausgang (A240)und einem Steueranschluss aufweist,
- einer der beiden Signal-Eingänge (E240a) der zweiten Multiplexeinheit (240) mit dem dem Treiber (30) zugeordneten Ausgang (A220a) der ersten Multiplexeinheit (220) mittelbar oder unmittelbar in Verbindung steht,
- der andere der beiden Signal-Eingänge (E240b) der zweiten Multiplexeinheit (240) mit dem Patterngenerator (210) mittelbar oder unmittelbar in Verbindung steht,
- der Signal-Ausgang (A240) der zweiten Multiplexeinheit (240) mit dem Treiber (30)mittelbar oder unmittelbar in Verbindung steht,
- der Steueranschluss der zweiten Multiplexeinheit (240) mit dem Kontrollbaustein (200) mittelbar oder unmittelbar in Verbindung steht und
- der Kontrollbaustein (200) die zweite Multiplexeinheit (240) derart ansteuert, dass die Ausgangssignale des Patterngenerators zum Treiber (30) gelangen, falls mit der ersten Multiplexeinheit (220) der Signaleingang (E10) des Sendemoduls (10) und die Steuereinrichtung (50) verbunden sind.

15. Optisches Sendemodul (10) nach Anspruch 3,
- wobei die Multiplexeinrichtung (40, 40')einen Level-Detektor (300) aufweist, mit dem sie den Signal-Level des Eingangssignals (SE) am Signaleingang (E10) des Sendemoduls (10) misst, und
- wobei die Multiplexeinrichtung (40, 40') anhand des Signal-Levels feststellt, ob es sich um ein Sendesignal (S0) für die Sendeeinrichtung (20) oder um ein Programmiersignal (CS) für die Steuereinrichtung (50) handelt.

16. Optisches Sendemodul (10) nach Anspruch 15, wobei
die Multiplexeinrichtung (40, 40') das am Signaleingang (E10) des Sendemoduls (10) anliegende Eingangsignal (SE) als Programmiersignal (CS) auffasst, wenn dessen Signal-Level einen vorgegebenen Schwell-Level über- oder unterschreitet.

17. Optisches Sendemodul (10) nach Anspruch 16,
- wobei der Level-Detektor in einer Kontrolleinheit (200) der Multiplexeinrichtung (40, 40') angeordnet ist und
- wobei die Kontrolleinheit (200) eine Speichereinrichtung (310) aufweist, mit der das Ergebnis der Signalauswertung festgehalten wird.

18. Optisches Sendemodul (10) nach Anspruch 17, wobei die Speichereinrichtung (310) ein Flip-Flop aufweist.

19. Optisches Sendemodul (10) nach Anspruch 3,
- wobei die Multiplexeinrichtung (40, 40') einen Frequenz-Detektor aufweist, mit dem sie den Frequenzbereich des Eingangssignals am Signaleingang des Sendemoduls misst, und
- wobei die Multiplexeinrichtung (40, 40') in Abhängigkeit vom Frequenzbereich feststellt, ob es sich bei dem Eingangssignal (SE) um ein Sendesignal (S0) für die Sendeeinrichtung (20) oder um ein Programmiersignal (CS) für die Steuereinrichtung (50) handelt.

20. Optisches Sendemodul (10) nach Anspruch 19, wobei
die Multiplexeinrichtung (40,40') das am Signaleingang (E10) des Sendemoduls (10) anliegende Einganssignal (SE) als Programmiersignal (CS) auffasst, wenn dessen Frequenzbereich außerhalb des für Sendesignale typischen Frequenzbereichs liegt.

21. Optisches Sendemodul (10) nach Anspruch 3, wobei
- die Multiplexeinrichtung (40, 40') einen Code-Detektor aufweist, mit dem sie die Codefolgen des am Signaleingang (E10) des Sendemoduls (10) anliegenden Eingangssignals (SE) auswertet, und
- wobei die Multiplexeinrichtung (40, 40') in Abhängigkeit von den feststellten Codefolgen unterscheidet, ob es sich um ein Sendesignal (S0) oder um ein Programmiersignal (CS) handelt.

22. Optisches Sendemodul (10) nach Anspruch 21, wobei
die Multiplexeinrichtung (40, 40') das am Signaleingang (E10) des Sendemoduls (10) anliegende Eingangssignal (SE) als Programmiersignal (CS) auffasst, wenn sich dessen Codefolgen von typischen oder vorab definierten Codefolgen für Sendesignale unterscheidet.

## Claims

1. An optical transmission module (10) having
- an optical transmission element (20),
- a driver (30) which drives the transmission element (20) and uses a transmission signal that is applied to its driver input (E30) to produce a drive signal (S0) for the transmission element (20),
- a programmable control device (50) which drives the driver (30), and
- a multiplexing device (40, 40'), which is connected between a signal input (E10) of the transmission module (10), the driver input (E30) and the control device (50) and by means of which an input signal (SE) that is applied to the signal input (E10) of the transmission module (10) can be switched to the control device (50) or to the driver (30).

2. The optical transmission module (10) as claimed in claim 1,
- wherein the multiplexing device (40, 40') has a control input (S40) via which a control signal (ST) can be fed into the multiplexing device (40, 40'), and
- wherein the multiplexing device (40, 40') is designed such that it can be switched by means of the control signal (ST) from a switching state in which the signal input (E10) of the transmission module (10) and the control device (50) are connected to a switching state in which the signal input (E10) of the transmission module (10) and the driver input (E30) are connected, or vice versa.

3. The optical transmission module (10) as claimed in claim 1,
- wherein the multiplexing device (40, 40') is designed such that it determines whether the input signal (SE) that is applied to the signal input (E10) of the transmission module (10) is a programming signal (CS) for the control device (50) or a transmission signal (S0) for the driver (30), and
- wherein the multiplexing device (40, 40') switches the input signal (SE) automatically to the control device (50) if the input signal (SE) is a programming signal (CS), or switches it to the driver (30) if the input signal (SE) is a transmission signal (S0).

4. The optical transmission module (10) as claimed in claim 3,
- wherein the multiplexing device (40, 40') has a monitoring module (200) whose input side is connected directly or indirectly to the signal input (E10) of the transmission module (10) and which identifies programming signals (CS) and transmission signals (S0) in each case,
- wherein the multiplexing device (40, 40') has a multiplexing unit (220) which is driven by the monitoring module (200) via a control connection (S220) and has at least one input (E220), two outputs (A220a, A220b) and said control connection (S220),
- wherein the multiplexing unit (220) is connected directly or indirectly on the input side to the signal input (E10) of the transmission module (10) and on the output side to the driver input (E30) of the driver (30) and to the control device (50), and
- wherein the multiplexing unit (220) connects the signal input (E10) of the transmission module (10) to the driver input (E30) of the driver (30) or to the control device (50) as a function of the control signals (ST2) from the monitoring module (200).

5. The optical transmission module (10) as claimed in claim 4, wherein a line terminating impedance (230) is arranged between the multiplexing unit (220) and the signal input (E10) of the transmission module (10).

6. The optical transmission module as claimed in claim 5, wherein the impedance of the line terminating impedance (230) is controllable.

7. The optical transmission module (10) as claimed in claim 6, wherein the line terminating impedance (230) has an impedance control input (ST4) which is connected to the monitoring module (200).

8. The optical transmission module (10) as claimed in claim 7, wherein the monitoring module (200) sets the line terminating impedance (230)
- to an impedance which is suitable for transmission signals when a transmission signal (S0) is applied to the signal input (E10) of the transmission module (10), and
- to an impedance which is suitable for a programming signal when a programming signal (CS) is applied to the signal input (E10) of the transmission module (10).

9. The optical transmission module (10) as claimed in claim 8, wherein
- the monitoring module (200) switches the line terminating impedance (230) to have a high impedance, or disconnects it, when a programming signal (CS) is applied to the signal input (E10) of the transmission module (10).

10. The optical transmission module (10) as claimed in claim 1,
- wherein the transmission module (10) has a pattern generator (210), and
- wherein the multiplexing device (40, 40') is designed such that it connects the pattern generator (210) to the driver (30) when the signal input (E10) of the transmission module (10) is connected to the control device (50).

11. The optical transmission module (10) as claimed in claim 10,
- wherein the multiplexing device (40, 40') has a control input (S40) via which a control signal (ST) can be fed into the multiplexing device (40, 40'), and
- wherein the multiplexing device (40, 40') is designed such that it can be switched by means of the control signal (ST) from a switching state which connects the signal input(E10) from the transmission module (10) and the control device (50) to a switching state which connects the signal input (E10) of the transmission module (10) and the driver input (E30) of the driver (30), or vice versa.

12. The optical transmission module (10) as claimed in claim 10,
- wherein the multiplexing device (40, 40') is designed such that it determines whether the input signal (SE) that is applied to the signal input (E10) of the transmission module (10) is a programming signal (CS) for the control device (50) or is a transmission signal (S0) for the driver (30), and
- wherein the multiplexing device (40, 40') switches the input signal (SE) automatically to the control device (50) if the input signal (SE) is a programming signal (CS), and switches it to the driver (30) if the input signal (SE) is a transmission signal (S0).

13. The optical transmission module (10) as claimed in claim 12,
- wherein the multiplexing device (40, 40') has a monitoring module (200) whose input side is connected directly or indirectly to the signal input (E10) of the transmission module (10) and which identifies programming signals (CS) and transmission signals (S0),
- wherein the multiplexing device (40, 40') has a first multiplexing (220) unit which is driven by the monitoring module (200) via a control connection (S220) and has at least one input (E220), two outputs (A220a, A220b) and said control connection (S220),
- wherein the first multiplexing unit (220) is connected directly or indirectly on the input side to the signal input (E10) of the transmission module (10) and on the output side to the driver input (E30) of the driver (30) and to the control device (50), and
- wherein the first multiplexing unit (220) connects the signal input (E10) of the transmission module (10) to the driver input (E30) of the driver (30) or to the control device (50) as a function of the control signals from the monitoring module (200).

14. The optical transmission module (10) as claimed in claim 13, wherein
- the multiplexing device (40, 40') has a second multiplexing unit (240) with at least two signal inputs (E240a, E240b), one signal output (A240) and one control connection,
- one of the two signal inputs (E240a) of the second multiplexing unit (240) is connected directly or indirectly to that output (A220a) of the first multiplexing unit (220) which is associated with the driver (30),
- the other of the two signal inputs (E240b) of the second multiplexing unit (240) is connected directly or indirectly to the pattern generator (210),
- the signal output (A240) of the second multiplexing unit (240) is connected directly or indirectly to the driver (30),
- the control connection of the second multiplexing unit (240) is connected directly or indirectly to the monitoring module (200), and
- the monitoring module (200) drives the second multiplexing unit (240) such that the output signals from the pattern generator (210) are passed to the driver (30) if the signal input (E10) of the transmission module (10) and control device (50) are connected to the first multiplexing unit (220).

15. The optical transmission module (10) as claimed in claim 3,
- wherein the multiplexing device (40, 40') has a level detector (300), by means of which it measures the signal level of the input signal (SE) at the signal input (E10) of the transmission module (10), and
- wherein the multiplexing device (40, 40') uses the signal level for determine whether this is a transmission signal (S0) for the transmission device (20) or a programming signal (CS) for the control device (50).

16. The optical transmission module (10) as claimed in claim 15, wherein
the multiplexing device (40, 40') regards the input signal (SE) which is applied to the signal input (E10) of the transmission module (10) as a programming signal (CS) when its signal level is greater than or less than a predetermined threshold level.

17. The optical transmission module (10) as claimed in claim 16,
- wherein the level detector is arranged in a monitoring unit (200) in the multiplexing device (40, 40'), and
- wherein the monitoring unit (200) has a memory device (310) which is used to store the result of the signal evaluation.

18. The optical transmission module (10) as claimed in claim 17, wherein the memory device (310) has a flipflop.

19. The optical transmission module (10) as claimed in claim 3,
- wherein the multiplexing device (40, 40') has a frequency detector, by means of which it measures the frequency range of the input signal at the signal input of the transmission module, and
- wherein the multiplexing device (40, 40') uses the frequency range to determine whether the input signal (SE) is a transmission signal (SO) for the transmission device (20) or is a programming signal (CS) for the control device (50).

20. The optical transmission module (10) as claimed in claim 19, wherein
the multiplexing device (40, 40') regards the input signal (SE) which is applied to the signal input (E10) of the transmission module (10) as a programming signal (CS) when its frequency range is outside the frequency range that is typical for transmission signals.

21. The optical transmission module (10) as claimed in claim 3, wherein
- the multiplexing device (40, 40') has a code detector, by means of which it evaluates the code sequences of the input signal (SE) which is applied to the signal input (E10) of the transmission module (10), and
- wherein the multiplexing device (40, 40') uses the code sequences which are found to determine whether this is a transmission signal (SO) or a programming signal (CS).

22. The optical transmission module (10) as claimed in claim 21, wherein
the multiplexing device (40, 40') regards the input signal (SE) which is applied to the signal input (E10) of the transmission module (10) as a programming signal (CS) when its code sequences are not the same as typical or previously defined code sequences for transmission signals.

## Revendications

1. Module (10) d'émission optique comprenant
- un élément (20) d'émission optique ;
- un dispositif (30) d'attaque, qui commande l'élément (20) d'émission et qui produit un signal (S0) de commande de l'élément (20° d'émission par un signal d'émission s'appliquant à son entrée (E30) ;
- un dispositif (50) de commande programmable, commandant le dispositif (30) d'attaque ; et
- un dispositif (40, 40') de multiplexage monté entre une entrée (E10) de signal du module (10) d'émission, l'entrée (E30) du dispositif d'attaque et le dispositif (50) de commande, dispositif (40, 40') par lequel un signal (SE) d'entrée, s'appliquant à l'entrée (E10) pour le signal du module (10) d'émission, peut être envoyé au dispositif (50) de commande ou au dispositif (30) d'attaque.

2. Module (10) d'émission optique suivant la revendication 1,
- dans lequel le dispositif (40, 40') de multiplexage a une entrée (S40) de commande, par laquelle un signal (ST) de commande peut être envoyé au dispositif (40, 40') de multiplexage ;
- dans lequel le dispositif (40, 40') de multiplexage est tel qu'il peut passer, par le signal (ST) de commande, d'un état de commutation, dans lequel l'entrée (E10) pour le signal du module (10) d'émission et le dispositif (50) de commande sont reliés, à un état de commutation, dans lequel l'entrée (E10) pour le signal du module (10) d'émission et l'entrée (E30) du dispositif d'attaque sont reliées ou inversement.

3. Module (10) d'émission optique suivant la revendication 1,
- dans lequel le dispositif (40, 40') de multiplexage est tel qu'il constate si le signal (SE) d'entrée s'appliquant à l'entrée (E10) pour le signal du module (10) d'émission est un signal (CS) de programmation du dispositif (50) de commande ou un signal (SO) d'émission pour le dispositif (30) d'attaque ; et
- dans lequel le dispositif (40, 40') de multiplexage envoie le signal (SE) d'entrée automatiquement au dispositif (50) de commande s'il s'agit d'un signal (CS) de programmation ou au dispositif (30) d'attaque s'il s'agit d'un signal (S0) d'émission.

4. Module (10) d'émission optique suivant la revendication 3,
- dans lequel le dispositif (40, 40') de multiplexage a un module (200) de contrôle, qui est en liaison directe ou indirecte du côté entrée avec l'entrée (E10) pour le signal du module (10) d'émission et qui détecte, respectivement, des signaux (CS) de programmation et des signaux (S0) d'émission ;
- dans lequel le dispositif (40, 40') de multiplexage a une unité (220) de multiplexage commandée par le module (200) de contrôle par l'intermédiaire d'une borne (S220) de commande et ayant au moins une entrée (E220), deux sorties (A220a, A220b) et ladite borne (S220) de commande ;
- dans lequel l'unité (220) de multiplexage est en liaison directe ou indirecte du côté entrée avec l'entrée (E10) pour le signal du module (10) d'émission et du côté sortie avec l'entrée (E30) du dispositif (30) d'attaque ainsi qu'avec le dispositif (50) de commande ; et
- dans lequel l'unité (220) de multiplexage relie, en fonction des signaux (ST2) de commande du module (200) de contrôle, l'entrée (E10) pour le signal du module (10) d'émission à l'entrée (E30) du dispositif (30) d'attaque ou au dispositif (50) de commande.

5. Module (10) d'émission optique suivant la revendication 4, dans lequel il est monté une résistance (230) de fin de ligne entre l'unité (220) de multiplexage et l'entrée (E10) pour le signal du module (10) d'émission.

6. Module (10) d'émission optique suivant la revendication 5, dans lequel la valeur de la résistance (230) de fin de ligne peut être réglée.

7. Module (10) d'émission optique suivant la revendication 6, dans lequel la résistance (230) de fin de ligne a une entrée (ST4) de réglage de la résistance, qui est en liaison avec le module (200) de contrôle.

8. Module (10) d'émission optique suivant la revendication 7, dans lequel le module (200) de contrôle
- règle la résistance (230) de fin de ligne à une valeur appropriée à des signaux d'émission dans le cas où un signal (S0) d'émission s'applique à l'entrée (E10) pour le signal du module (10) d'émission ; et
- règle la résistance (230) de fin de ligne à une valeur appropriée à un signal de programmation dans le cas où un signal (CS) de programmation s'applique à l'entrée (E10) pour le signal du module (10) d'émission.

9. Module (10) d'émission optique suivant la revendication 8, dans lequel
- le module (200) de contrôle branche à grande valeur ohmique ou débranche la résistance (230) de fin de ligne dans le cas où un signal (CS) de programmation s'applique à l'entrée (E10) pour le signal du module (10) d'émission.

10. Module (10) d'émission optique suivant la revendication 1,
- dans lequel le module (10) d'émission a un générateur (210) de configuration ; et
- dans lequel le dispositif (40, 40') de multiplexage est tel qu'il relie le générateur (210) de configuration au dispositif (30) d'attaque lorsque l'entrée (E10) pour le signal du module (10) d'émission est reliée au dispositif (50) de commande.

11. Module (10) d'émission optique suivant la revendication 10,
- dans lequel le dispositif (40, 40') de multiplexage a une entrée (S40) de commande par laquelle un signal (ST) de commande peut être envoyé au dispositif (40, 40') de multiplexage ; et
- dans lequel le dispositif (40, 40') de multiplexage est tel qu'il peut passer, par le signal (ST) de commande, d'un état de commutation reliant l'entrée (E10) pour le signal du module (10) d'émission et le dispositif (50) de commande à un état de commutation reliant l'entrée (E10) pour le signal du module (10) d'émission et l'entrée (E30) du dispositif (30) d'attaque ou inversement.

12. Module (10) d'émission optique suivant la revendication 10,
- dans lequel le dispositif (40, 40') de multiplexage est tel qu'il constate si le signal (SE) d'entrée s'appliquant à l'entrée (E10) pour le signal du module (10) d'émission est un signal (CS) de programmation du dispositif (50) de commande ou un signal (S0) d'émission pour le dispositif (30) d'attaque ; et
- dans lequel le dispositif (40, 40') de multiplexage envoie le signal (SE) d'entrée automatiquement au dispositif (50) de commande dans le cas où il s'agit d'un signal (CS) de programmation et au dispositif (30) d'attaque dans le cas où il s'agit d'un signal (S0) d'émission.

13. Module (10) d'émission optique suivant la revendication 12,
- dans lequel le dispositif (40, 40') de multiplexage a un module (200) de contrôle, qui est en liaison directe ou indirecte du côté entrée avec l'entrée (E10) pour le signal du module (10) d'émission et qui reconnaît des signaux (CS) de programmation et des signaux (SO) d'émission ;
- dans lequel le dispositif (40, 40') de multiplexage a une première unité (220) de multiplexage, qui est commandée par le module (200) de contrôle par l'intermédiaire d'une borne (S220) de commande et qui a au moins une entrée (E220), deux sorties (A220a, A220b) et ladite borne (S220) de commande ;
- dans lequel la première unité (220) de multiplexage est en liaison directe ou indirecte du côté entrée avec l'entrée (E10) pour le signal du module (10) d'émission et du côté sortie avec l'entrée (E30) du dispositif (30) d'attaque ainsi qu'avec le dispositif (50) de commande ; et
- dans lequel la première unité (220) de multiplexage relie, en fonction des signaux de commande du module (200) de contrôle, l'entrée (E10) pour le signal du module (10) d'émission à l'entrée (E30) du dispositif (30) d'attaque ou au dispositif (50) de commande.

14. Module (10) d'émission optique suivant la revendication 13,
- dans lequel le dispositif (40, 40') de multiplexage a une deuxième unité (240) de multiplexage ayant au moins deux entrées (E240a, E240b) pour le signal, une sortie (A240) pour le signal et une borne de commande ;
- l'une des deux entrées (E240a) pour le signal de la deuxième unité (240) de multiplexage est en liaison directe ou indirecte avec la sortie (A220a), associée au dispositif (30) d'attaque de la première unité (220) de multiplexage ;
- l'autre des deux entrées (A240b) pour le signal de la deuxième unité (240) de multiplexage est en liaison directe ou indirecte avec le générateur (210) de configuration ;
- la sortie (A240) pour le signal de la deuxième unité (240) de multiplexage est en liaison directe ou indirecte avec le dispositif (30) d'attaque ;
- la borne de commande de la deuxième unité (240) de multiplexage est en liaison directe ou indirecte avec le module (200) de contrôle ; et
- le module (200) de contrôle commande la deuxième unité (240) de multiplexage de façon à ce que les signaux de sortie du générateur de configuration arrivent au dispositif (30) d'attaque dans le cas où l'entrée (E10) pour le signal du module (10) d'émission et le dispositif (50) de commande sont reliés à la première unité (220) de multiplexage.

15. Module (10) d'émission optique suivant la revendication 3,
- dans lequel le dispositif (40, 40') de multiplexage a un détecteur (300) de niveau par lequel il mesure le niveau du signal (SE) d'entrée à l'entrée (E10) pour le signal du module (10) d'émission ; et
- dans lequel le dispositif (40, 40') de multiplexage constate au moyen du niveau du signal s'il s'agit d'un signal (S0) d'émission pour le dispositif (20) d'émission ou d'un signal (CS) de programmation du dispositif (50) de commande.

16. Module (10) d'émission optique suivant la revendication 15, dans le dispositif (40, 40') de multiplexage interprète le signal (SE) d'entrée s'appliquant à l'entrée (E10) pour le signal du module (10) d'émission comme un signal (CS) de programmation lorsque son niveau de signal est supérieur ou est inférieur à un niveau de seuil prescrit.

17. Module (10) d'émission optique suivant la revendication 16,
- dans lequel le détecteur de niveau est disposé dans une unité (200) de contrôle du dispositif (40, 40') de multiplexage ; et
- dans lequel l'unité (200) de contrôle a un dispositif (310) de mémoire, par lequel le résultat de l'évaluation du signal est conservé.

18. Module (10) d'émission optique suivant la revendication 17, dans lequel le dispositif (310) de mémoire comporte une bascule.

19. Module (10) d'émission optique suivant la revendication 3,
- dans lequel le dispositif (40, 40') de multiplexage a un détecteur de fréquence, par lequel il mesure le domaine de fréquence du signal d'entrée à l'entrée pour le signal du module d'émission ; et
- dans lequel le dispositif (40, 40') de multiplexage constate en fonction du domaine de fréquence si le signal (SE) d'entrée est un signal (SO) d'émission pour le dispositif (20) d'émission ou un signal (CS) de programmation du dispositif (50) de commande.

20. Module (10) d'émission optique suivant la revendication 19, dans lequel le dispositif (40, 40') de multiplexage interprète le signal (SE) d'entrée s'appliquant à l'entrée (E10) pour le signal du module (10) d'émission comme un signal (CS) de programmation lorsque son domaine de fréquence est en dehors du domaine de fréquence typique pour des signaux d'émission.

21. Module (10) d'émission optique suivant la revendication 3, dans lequel
- le dispositif (40, 40') de multiplexage a un détecteur de codes, par lequel il exploite les successions de codes du signal d'entrée s'appliquant à l'entrée (E10) pour le signal du module (10) d'émission ; et
- dans lequel le dispositif (40, 40') de multiplexage distingue en fonction des successions de codes constatées s'il s'agit d'un signal (S0) d'émission ou d'un signal (CS) de programmation.

22. Module (10) d'émission optique suivant la revendication 1, dans lequel le dispositif (40, 40') de multiplexage interprète le signal (SE) d'entrée s'appliquant à l'entrée (E10) pour le signal du module (10) d'émission comme un signal (CS) de programmation si ses successions de codes se distinguent de successions de codes typiques ou définies à l'avance pour des signaux d'émission.
